Europäisches Patentamt

European Patent Office

Office européen des brevets

(19)

(11) Veröffentlichungsnummer : **0 130 625**
**B1**

(12) **EUROPÄISCHE PATENTSCHRIFT**

(45) Veröffentlichungstag der Patentschrift :
28.09.88

(21) Anmeldenummer : 84107820.7

(22) Anmeldetag : 05.07.84

(51) Int. Cl.⁴ : **B 41 F 23/04**

(54) Verfahren und Vorrichtung zum Wärmetrocknen insbesondere bedruckter oder gefärbter Bahnen.

(30) Priorität : 05.07.83 DE 3324130

(43) Veröffentlichungstag der Anmeldung :
09.01.85 Patentblatt 85/02

(45) Bekanntmachung des Hinweises auf die Patenterteilung : 28.09.88 Patentblatt 88/39

(84) Benannte Vertragsstaaten :
AT CH DE FR GB LI NL SE

(56) Entgegenhaltungen :
CH-A-  226 236
DE-A- 2 947 785
DE-A- 3 228 681
LU-A-   74 132
US-A- 3 874 091

(73) Patentinhaber : Böhnensieker, Franz
Vom-Stein-Strasse 27
D-4834 Harsewinkel (DE)

(72) Erfinder : Böhnensieker, Franz
Vom-Stein-Strasse 27
D-4834 Harsewinkel (DE)

(74) Vertreter : Schmidt, Horst, Dr.
Patentanwälte Pohlmann & Schmidt Siegfriedstrasse
8
D-8000 München 40 (DE)

EP 0 130 625 B1

## Beschreibung

Die Erfindung betrifft ein Verfahren und eine Vorrichtung zum Wärmetrocknen von bedruckten oder gefärbten Bahnen.

Bei einer bekannten Trocknungsvorrichtung (US-A-38 74 091) wird die zu trocknende Bahn frei schwebend durch ein Trocknungsgehäuse geführt und mittels dagegen geblasener heißer Luft berührungslos getrocknet. Bei einer derartigen Trocknung ist der Wärmeübergang sehr gering und damit für den Trocknungsprozeß ein hoher Energieaufwand erforderlich, selbst wenn für eine wenigstens teilweise Rückführung der am Trocknungsprozeß teilgenommenen Heißluft gesorgt wird. Bekannt ist ferner (DE-A-29 47 785) das hinsichtlich der aufzuwendenden Energie wirksamere Kontakttrocknen bedruckter Bahnen mittels Heizwalzen, wobei die noch feuchte Druckfarbe mit deren Oberfläche in unmittelbarer Berührung gelangt. Die feuchte Druckfarbe kann sich daher leicht auf den Heizwalzen absetzen, und eine Folge davon ist ein häufiges Verschmieren des Druckes. Nach dem Trocknen wird die Bahn längs Kühlwalzen zur Kontaktkühlung geführt.

Der Erfindung liegt die Aufgabe zugrunde, ein Verfahren und eine Vorrichtung der eingangs erwähnten Gattung zu schaffen, mit denen die bislang beim Trocknen von bedruckten oder gefärbten Bahnen bestehenden Schwierigkeiten beseitigt sind. Insbesondere soll das Trocknen der Bahnen mit vergleichsweise geringem Energieaufwand ohne die Gefahr eines Verschmierens der Druckfarbe möglich sein.

Das erfindungsgemäße Verfahren unter Kontaktbeheizung und anschließender Kontaktkühlung der Bahn zeichnet sich dadurch aus, daß die Bahn vor der Kontaktbeheizung einer kurzzeitigen berührungslosen Wärmebehandlung bei einer höheren Temperatur als während der Kontaktbeheizung unterworfen wird.

Die kurzzeitige berührungslose Wärmebehandlung (Wärmeschockbehandlung) der Bahn kann gemäß einer Weiterbildung der Erfindung mittels eines gasförmigen Mediums bei einer Temperatur von etwa 300 °C, die Kontaktbeheizung mittels Heizwalzen bei einer Temperatur von etwa 230 °C und die Kontaktkühlung mittels Kühlwalzen bei einer Temperatur von etwa 25 °C vorgenommen werden. Vorzugsweise werden dabei gemäß einer anderen Weiterbildung der Erfindung die Heiz- und Kühlwalzen im wesentlichen S-förmig von der Bahn umschlungen.

Die erfindungsgemäße Vorrichtung mit einem in von der Bahn nacheinander durchlaufenen Kammern unterteilten Gehäuse, wobei in einer (zweiten) Kammer wenigstens ein Paar antreibbare Heizwalzen zur Kontaktbeheizung der Bahn und in einer nachfolgenden (dritten) Kammer wenigstens ein Paar antreibbare Kühlwalzen zur Kontaktkühlung der Bahn angeordnet sind, zeichnet sich durch eine der zweiten Kammer vorgeschaltete erste Kammer aus, in die ein gasförmiges Medium zur kurzzeitigen berührungslosen Wärmebehandlung der Bahn vor der Kontaktbeheizung einführbar ist.

Um ein Verschmutzen bzw. einen Farbaufbau auf den Heizwalzen zu vermeiden, kann gemäß einer Weiterbildung der Erfindung jeder Heizwalze eine Auftragwalze für ein Trennmittel und eine Reinigungwalze zugeordnet sein. Eine bevorzugte Ausbildung dieser Auftrags- und Reinigungswalzen ist Gegenstand des Patentanspruches 6. Bezüglich bevorzugter weiterer Maßnahmen zur Rückgewinnung der für die Beheizung und Kühlung aufzubringenden Energie wird auf die Patentansprüche 7 bis 13 verwiesen.

Ein Vorteil der erfindungsgemäßen Vorgehensweise besteht u. a. darin, daß die zu trocknende Bahn nur über sehr kurze Zeitdauer einer energieverbrauchsintensiven berührungslosen Wärmebehandlung mit Heißluft unterzogen werden muß. In der ersten Wärmebehandlungsstufe wird die Oberfläche der Bahn nur leicht angetrocknet, so daß sie in der zweiten Wärmebehandlungsstufe, in der die Wärmekontakttrocknung erfolgt, nicht an den Heizwalzen ankleben kann und daher die Farbe nicht verschmiert. Da die eigentliche Trocknung der Bahn eine Kontakttrocknung ist, braucht entsprechend wenig Energie aufgewendet zu werden. Eine nach dem Verfahren arbeitende Trocknungsvorrichtung benötigt nur eine geringe Baulänge. Ein Vorteil der Kammer bauweise der Vorrichtung liegt darin, daß die aufgebrachte Energie nicht verlorengeht, sondern über Wärmetauscher wenigstens teilweise zurückgewonnen werden kann.

Die Erfindung wird nachfolgend anhand eines Ausführungsbeispieles und der Zeichnung näher erläutert. Es zeigen :

Fig. 1 eine Trocknungsvorrichtung nach der Erfindung in schematischer Seitenansicht,

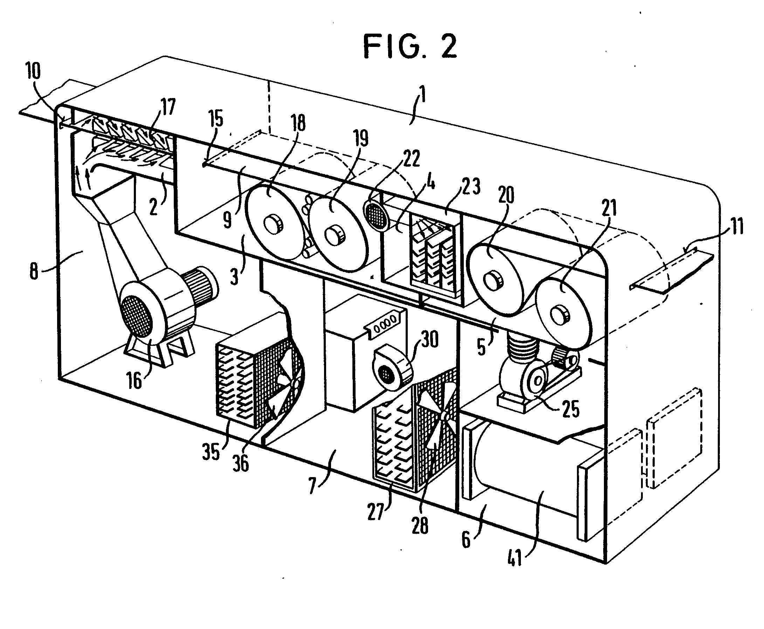

Fig. 2 die in Fig.1 gezeigte Trocknungsvorrichtung in perspektivischer Ansicht

Fig. 3 eine perspektivische Detailansicht in vergrößertem Maßstab der Anordnung einer Auftrags- und Reinigungswalze an einer Heizwalze der in Fig. 1 gezeigten Vorrichtung und

Fig. 4 eine perspektivische teilweise weggeschnittene Ansicht in vergrößertem Maßstab einer der Walzen für den Auftrag eines Trennmittels oder für die Reinigung.

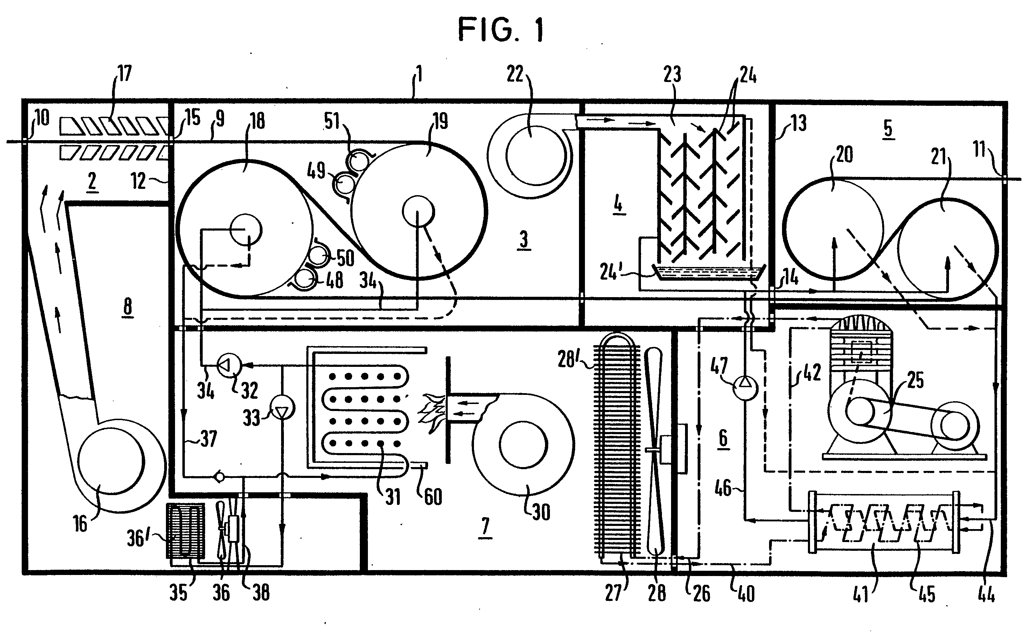

Fig. 1 zeigt ein im wesentliches geschlossenes Gehäuse, welches in mehrere Kammern 2 bis 8 unterteilt ist. Die bedruckte oder gefärbte Bahn 9 durchläuft zum Zwecke der Trocknung nacheinander die Kammern 2, 3 und 5, wobei die Bahn in die erste Kammer 2 über einen Einlaßpalt 10 hineingelangt und an der dritten Kammer 5 über einen Auslaßpalt 11 aus der Vorrichtung herausgeführt wird. Eine die Kammer 2 von der Kammer 3 trennende Wand 12 weist ebenso wie eine der Kammer 5 zugeordnete Trennwand 13 jeweils einen Durchlaßspalt 14 bzw. 15 für die Bahn auf.

Die zunächst die Kammer 2 durchlaufende Bahn 9 wird hier einer berührungslosen Wärmeschockbehandldung unterzogen. Zu diesem Zweck wird ein gasförmiges Medium z. B. Warmluft bei einer Temperatur von z. B. etwa 300 °C mittels eines Gebläses 16 in die Kammer 2 eingeblasen und über Leitbleche 17 gezielt auf die Oberfläche der Bahn 9 gerichtet. Nach der Wärmeschockbehandldung, durch die die Farbe an der Oberfläche der Bahn eine dünne Haut erhalten hat, wird die Bahn 9 in der zweiten Kammer 3 S-förmig längs eines Paares Heizwalzen 18, 19 geführt und dabei einer Kontakttrocknung unterzogen. Die Temperatur der Heizwalzen kann z. B. etwa 230 °C betragen. Obschon nur ein Paar Heizwalzen 18, 19 dargestellt ist, können, wenn erwünscht, auch mehrere Heizwalzen vorgesehen werden. Durch die S-förmige Umschlingungder Heizwalzen 18, 19 wird erreicht, daß die Ober- und Unterseite der Bahn gleichmässig erwärmt und damit die Farbe gleichmässig getrocknet wird. Nach diesem Kontakttrocknungsvorgang gelangt die Bahn 9 in die dritte Kammer 5, wo sie z. B. auf 25 °C oder Raumtemperatur abgekühlt wird. Zu diesem Zweck ist in der Kammer 5 ein Paar Kühlwalzen 20, 21 vorgesehen, die von der Bahn ebenfalls S-förmig umschlungen werden. Anstelle eines Paares Kühlwalzen können, wenn erwünscht, auch mehrere Kühlwalzen vorgesehen sein. Nach dem Kühlen verlässt die Bahn 9 durch den Auslaßspalt 11 der Kammer 5 die Vorrichtung.

Wie erwähnt, wird in die erste Kammer 2 ein erwärmtes gasförmiges Medium, bei dem es sich vorzugsweise um Warmluft handelt, eingeblasen. Um zu verhindern, daß die Warmluft aus dem geschlossenen Gehäuse 1 durch den Einlaßspalt 10 nach außen gelangt, ist der Einlaßspalt 10 möglichst eng gestaltet und kann, wenn erwünscht, eine an sich bekannte Abdichtung, z. B. eine Labyrinthdichtung aufweisen.

Der Durchlaßspalt 15 in der Trennwand 12 zwischen der Kammer 2 und der Kammer 3 ist dagegen vergleichsweise groß bemessen, so daß die in die erste Kammer 2 eingeblasene Warmluft durch den Spalt 15 in die zweite Kammer 3 gelangen kann. Aus der zweiten Kammer 3 wird dann die Warmluft mittels eines Gebläses 22 in eine vierte Kammer 4 vorzugsweise direkt auf einen darin angeordneten Flüssigkeitsabscheider 23 geblasen. Der Abscheider 23 umfaßt von einem geeigneten Kühlmittel, wie Wasser, durchströmte Bleche 24, an denen eine in der warmen Abluft aus der zweiten Kammer 3 enthaltene Flüssigkeit, z. B. ein Lösungsmittel, kondensieren kann. Die Flüssigkeit bzw. das Lösungsmittel sammelt sich zur Rückgewinnung in einer unterhalb des Abscheiders 23 angeordneten Auffangwanne 24'. Die abkühlte Luft kann durch nicht gezeigte beispielsweise mit Aktivkohle versehene Filter nach außen abgeführt werden.

An einer geeigneten Stelle des Gehäuses, z. B. unterhalb der dritten Kammer 5, ist eine fünfte Kammer 6 vorgesehen, in der eine Kältemaschine bzw. ein Kompressor 25 angeordnet ist. Ein in der Kältemaschine 25 erwärmtes Kältemittel strömt über eine Leitung 26 zu einem Wärmetauscher 27, der in einer im Gehäuse 1 vorgesehenen sechsten Kammer 7 angeordnet ist, um die Wärme an die Umgebung abzugeben. Dem Wärmetauscher 27 ist ein Gebläse 28 vorgeschaltet, das durch seitlich im Gehäuse 1 vorgesehene nicht gezeigte Schlitze Kaltluft von außen ansaugt und durch die Lamellen 28' des Wärmetauschers 27 hindurchdrückt. Die auf diese Weise auf z. B. etwa 100 bis 120 °C vorgewärmte Luft dient als Verbrennungsluft für eine Heizeinrichtung in Gestalt z. B. eines Heizgebläses 30, das ebenfalls in der sechsten Kammer 7 vorgesehen ist.

Das Heizgebläse 30 erwärmte ein Wärmeübertragungsmedium bzw. eine Wärmeübertragungsflüssigkeit in einem Wärmetauscher 31. Vom Wärmetauscher 31 gelangt das Wärmeübertragungsmedium teilweise mittels einer Pumpe 32 und einer Leitung 34 zu den Heizwalzen 18, 19 in der zweiten Kammer 3 und teilweise mittels einer Pumpe 33 zu einem Wärmetauscher 35 in einer siebten Kammer 8. Dem Wärmetauscher 35 in der Kammer 8 ist ein Gebläse 36 vorgeschaltet, das über nicht dargestellte Lufteinlasschlitze im Gehäuse 1 Luft von außen ansaugt und durch die Lamellen 36' des Wärmetauschers 35 drückt.

Die durch den Wärmetauscher 35 auf z. B. etwa 300 °C erwärmte Luft wird durch das Gebläse 16 vorzugsweise direkt in die Kammer 2 eingeblasen, um die eingangs erwähnte kurzzeitige berührungslose Wärmetrocknungsbehandlung der Bahn 9 vorzunehmen. Sowohl den Heizwalzen 18 und 19 als auch dem Gebläse 16 sind vorzugsweise Wärmesensoren zugeordnet, über die die Einschaltdauer der Pumpen 32 und 33 gesteuert werden kann. Die Pumpe 32 führt den Heizwalzen 18, 19 nur jeweils soviel erwärmtes Wärmeübertragungsmedium zu, wie zur Erhaltung einer bestimmten Temperatur von z. B. 230 °C erforderlich ist, während dem Wärmetauscher 35 durch die Pumpe 33 das Wärmeübertragungsmedium nur solange zugeführt wird, bis der dem Gebläse 16 zugeordnete Wärmesensor eine gewünschte bestimmte Temperatur der Warmluft von z. B. 300 °C ermittelt. Die Rückführung des Wärmeübertragungsmediums nach Durchlauf durch die Heizwalzen 18, 19 bzw. den Wärmetauscher 35 erfolgt über Rückführleitungen 37 bzw. 38.

Dem Wärmetauscher 27 wird das im Kompressor 25 erwärmte Kältemittel zugeführt. Nach Durchlauf durch den Wärmetauscher 27 gelangt das abgekühlte Kältemittel über eine Leitung 40 in einen Wärmetauscher 41 und von dort über eine Leitung 42 zurück zum Kompressor 25. Im Wärmetauscher 41 wird das Kältemittel wieder aufgeheizt, so daß durch den Kompressor 25 keine Energie zum Aufheizen des Kältemittels aufgebracht werden muss.

Für das Kühlen der vom Kühlmittel durchflossenen Bleche 24 des Abscheiders 23 und der Kühlwalzen 20, 21 ist ein vom Kältemittelumlaufsystem (das den Kompressor 25 und den Wärmetauscher 27 umfaßt) unabhängiges Kühlmittelumlaufsystem vorgesehen, wie dies aus Fig. 1 hervorgeht. Das im Abscheider 23 und in den Kühlwalzen 20, 21 erwärmte Kühlmittel, z. B. Kühlwasser, gelangt über eine Leitung 44 in den Wärmetauscher 41, wo ein Wärmeaustausch mit dem durch die Leitung 45 strömenden Kältemittel des Kompressors 25 stattfindet. Hierdurch wird das Kühlmittel für den Abscheider 23 und die Kühlwalzen 20, 21 abgekühlt. Das abgekühlte Kühlmittel wird über eine Leitung 46 mittels einer Pumpe 47 wieder zum Abscheider 23 bzw. den Kühlwalzen 20, 21 zurückgeführt.

Das Gehäuse 1 ist, wie dargestellt, gegenüber der Außenumgebung abgeschirmt und im Inneren durch die im wesentlichen hermetisch zueinander abgeschirmten Kammern unterteilt. Dadurch wird ein nahezu geschlossener Energiekreis geschaffen, so daß der Wirkungsgrad und damit die Energieeinsparung gegenüber herkömmlichen Trocknungsvorrichtungen erheblich ist und z. B. etwa 60 % betragen kann.

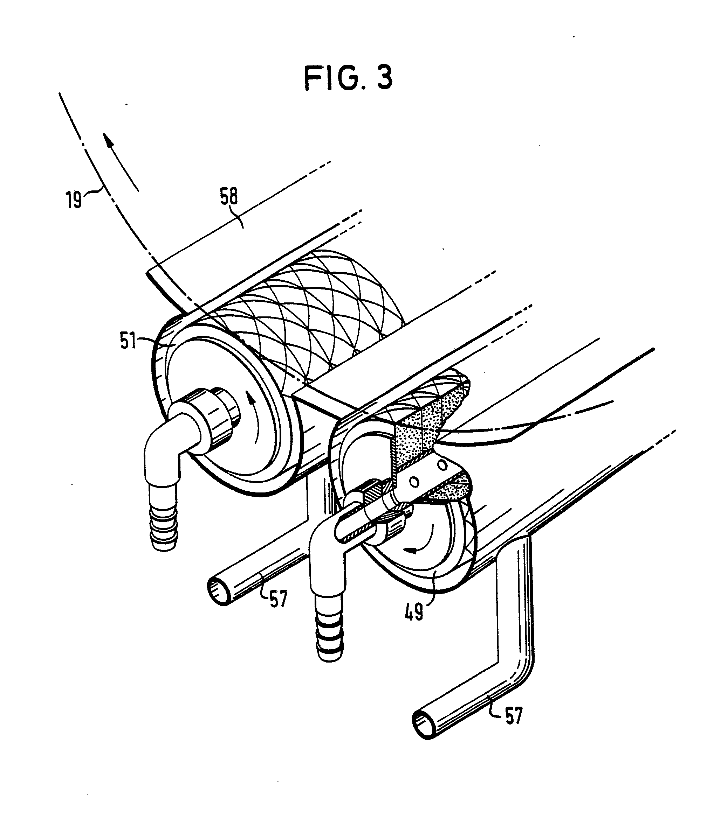

In Fig. 1 ist angedeutet, daß jeder Heizwalze 18, 19 eine Reinigungswalze 48, 49 und eine Auftragswalze 50, 51 für ein Trennmittel zugeordnet ist. Da die Reinigungs- und Auftragswalzen identisch ausgebildet sind, ist in Fig. 3 lediglich eine Heizwalze in Verbindung mit einer Auftragswalze 51 und einer Reinigungswalze 49 dargestellt. Die Auftragswalze 51 hat die Aufgabe, ständig einen dünnen Film aus einem Trennmittel, z. B. einer silikonhaltigen Flüssigkeit, auf die Heizwalze aufzutragen, um zu verhindern, daß sich zu trocknende frische Farbe auf der Walze absetzen kann. Die der Auftragswalze 51 zugeordnete Reinigungswalze 49 dient dazu, den von der Auftragswalze 51 aufgegebenen Trennmittelfilm nach einem Umlauf der Heizwalze abzuwischen. Dadurch wird erreicht, daß zwischen der zu trocknenden Bahn 9 und der Heizwalze 19 stets ein frischer Trennmittelfilm vorliegt. Die Umfangsgeschwindigkeit der Heizwalze 19 ist vorzugsweise größer als die Umfangsgeschwindigkeiten der Reinigungswalze 49 und der Auftragswalze 50, wobei die Drehrichtung der Reinigungswalze 49 entgegengesetzt zur Drehrichtung der Heizwalze 19 erfolgt.

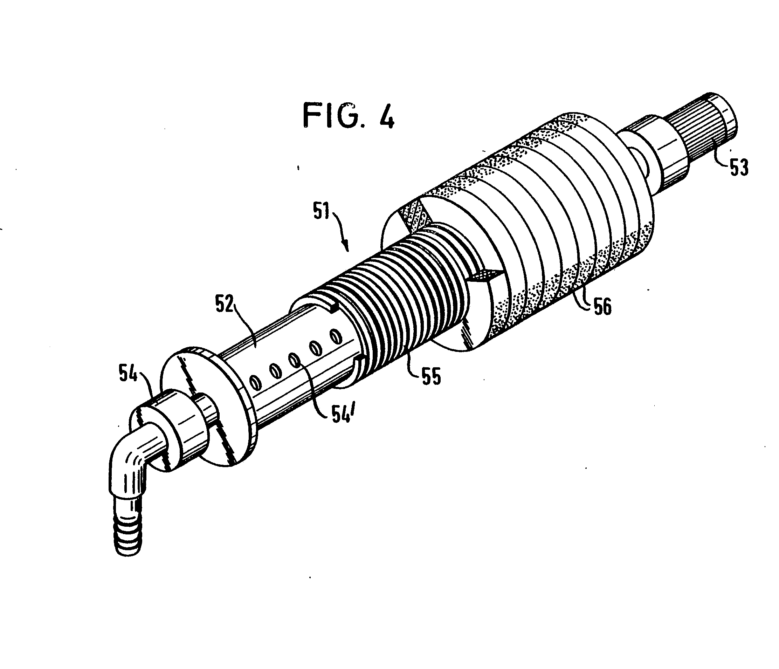

Die Auftragsstärke sowohl des Trennmittelfilmes wie auch des Reinigungsmittels kann durch stufenlose Drehzahländerung und/oder Änderung des Druckes des den Walzen zugeführten Trenn- bzw. Reinigungsmittels beliebig geändert werden. Da die Walzen 48 und 51 identisch aufgebaut sind, ist in Fig. 4 nur eine dieser Walzen, beispielsweise die Auftragswalze 51, perspektivisch dargestellt. Sie besteht aus einem rohrförmigen Körper 52, der von einem an einem Ende angeflanschten Motor, z. B. Pneumatikmotor 53, angetrieben werden kann. Am anderen Ende des rohrförmigen Körpers 52 ist ein Drehanschluss 54 vorgesehen, über den das Trennmittel ins Innere des rohrförmigen Körpers 52 gepumpt werden kann.

Über eine Vielzahl von Durchgangsbohrungen 54' gelangt das Trennmittel an die Außenseite des rohrförmigen Körpers 52. Um den rohrförmigen Körper 52 kann ferner, wie dargestellt, ein Draht 55 wendelförmig gewickelt sein. Auf dem Drahtwickel sind dicht nebeneinander Ringe 56 aus einem fasrigen bzw. filzartigen Material angeordnet. Die Ringe 56 werden gleichmässig mit dem Trennmittel getränkt und benetzen ihrerseits die Heizwalze 19 mit einem sehr dünnen Trennmittelfilm.

Nach einem Umlauf der Heizwalze 19 kommt das von der Auftragswalze 51 aufgetragene Trennmittel in Berührung mit der Reinigungswalze 49, aus deren Filzringen 56 ständig ein Reinigungsmittel unter Bildung eines dünnen Filmes auf die Heizwalze abgegeben wird. Aufgrund der Relativgeschwindigkeit zwischen der Heizwalze 19 und der Reinigungswalze 49 wird der von der Auftragswalze 51 aufgegebene und eventuell leicht verschmutzte Trennmittelfilm abgewaschen. Das abgewaschene Trennmittel strömt dann über einen Abflußstutzen 57 ab. Da die Oberflächen der Walzen 49 und 51 porös sind und das Trennmittel bzw. Reinigungsmittel von innen nach außen gedrückt wird, findet fortlaufend eine Selbstreinigung statt. Der Abflußstutzen 57 ist an eine Wanne 58 angeschlossen, die sowohl die Reinigungswalze 49 als auch die Auftragswalze 51 umschließt, vgl. Fig. 3. Zweckmäßigerweise erstreckt sich zwischen dem Abflußstutzen 57 und der Auftragswalze 51 über deren gesamte Länge eine Rakeleinrichtung, die das verschmutzte von der Reinigungswalze 49 abgewaschene Trennmittel von der Heizwalze 19 abzieht.

In Fig. 1 ist zu sehen, daß der Wärmetauscher 41, an dem ein Wärmeaustausch zwischen dem Kältemittel des Kältemittelumlaufsystems und dem Kühlmittel des Kühlmittelumlaufsystems stattfindet, zusammen mit dem Kompressor 25 in der Kammer 6 angeordnet ist. Der Wärmetauscher 27 des Kältemittelumlaufsystems, das Heizgebläse 30 und der Wärmetauscher 31 des Umlaufsystems für das Wärmeübertragungsmedium sind in der sechsten Kammer 7 untergebracht. Der Wärmetauscher 35 für die der Kammer 2 zuzuführende Warmluft ist zusammen mit dem Warmluftgebläse 16 in der siebten Kammer 8 vorgesehen.

Das Kältemittel des den Kompressor 25 umfassenden Kältemittelumlaufsystems strömt durch den Wärmetauscher 27 und erwärmt die Verbrennungsluft für das Heizgebläse 30. Das aus dem Wärmetauscher 27 zurückfließende abgekühlte Kältemittel strömt in den Wärmetauscher 41, um das Kühlmittel des Kühlmittelumlaufsystems abzukühlen. Das abgekühlte Kühlmittel gelangt zum Abscheider 23 und zu den Kühlwalzen 20, 21, um dann zurück zum Wärmetauscher 41 zu fließen. Das im Wärmetauscher 31 mittels des Heizgebläses 30 aufgeheizte flüssige Wärmeübertragungsmedium strömt teilweise zu den Heizwalzen 18, 19 und teilweise zum Wärmetauscher 35 in der Kammer 8. Dem Wärmetauscher 31 in der Kammer 7 kann ein schematisch in Fig. 1 angedeuteter Abgaskamin 60 zugeordnet sein, durch den die Verbrennungsabgase des Heizgebläses 30 nach außen abgeführt werden können.

Die Kammern 6, 7 und 8 sind vorzugsweise hermetisch voneinander getrennt.

Die Erfindung wurde vorausgehend abhand einer bevorzugten Ausführungsform beschrieben. Jedoch ist die Erfindung nicht auf die beschriebene und gezeigte Ausführungsform beschränkt.

**Patentansprüche**

1. Verfahren zum Wärmetrocknen von bedruckten oder gefärbten Bahnen unter Kontaktbeheizung und anschließender Kontaktkühlung der Bahn, dadurch gekennzeichnet, daß die Bahn vor der Kontaktbeheizung einer kurzzeitigen berührungslosen Wärmebehandlung bei einer höheren Temperatur als während der Kontaktbeheizung unterworfen wird.

2. Verfahren nach Anspruch 1, dadurch gekennzeichnet, daß die kurzzeitige berührungslose Wärmebehandlung der Bahn mittels eines gasförmigen Mediums bei einer Temperatur von etwa 300 °C, die Kontaktbeheizung mittels Heizwalzen (18, 19) bei einer Temperatur von etwa 230 °C und die Kontaktkühlung mittels Kühlwalzen (20, 21) bei einer Temperatur von etwa 25 °C vorgenommen wird.

3. Verfahren nach Anspruch 2, dadurch gekennzeichnet, daß die Bahn die Heiz- und Kühlwalzen (18-21) im wesentlichen S-förmig umschlingt.

4. Vorrichtung zum Wärmetrocknen von bedruckten oder gefärbten Bahnen mit einem in von der Bahn nacheinander durchlaufenen Kammern unterteilten Gehäuse (1), wobei in einer (zweiten) Kammer (3) wenigstens ein Paar antreibbare Heizwalzen (18, 19) zur Kontaktbeheizung der Bahn und in einer nachfolgenden (dritten) Kammer (5) wenigstens ein Paar antreibbare Kühlwalzen (20, 21) zur Kontaktkühlung der Bahn angeordnet sind, gekennzeichnet durch eine der zweiten Kammer (3) vorgeschaltete erste Kammer (2), in die ein gasförmiges Medium zur kurzzeitigen berührungslosen Wärmebehandlung der Bahn vor der Kontaktbeheizung einführbar ist.

5. Vorrichtung nach Anspruch 4, dadurch gekennzeichnet, daß jeder Heizwalze (18, 19) eine Auftragswalze (50, 51) für ein Trennmittel und eine Reinigungswalze (48, 49) zugeordnet ist.

6. Vorrichtung nach Anspruch 5, dadurch gekennzeichnet, daß jede Auftragswalze (50, 51) und Reinigungswalze (48, 49) einen mit radialen Durchgangsbohrungen (54') versehenen rohrförmigen Körper (52) umfasst, auf dem eine poröse Beschichtung aus einer Vielzahl von eng nebeneinander angeordneten Ringen (56) aus fasrigem oder filzartigem Material angeordnet ist.

7. Vorrichtung nach einem der Ansprüche 4 bis 6, gekennzeichnet durch ein Gebläse (22), dessen Ansaugseite mit der zweiten Kammer (3) und Ausblasseite mit einer vierten Kammer (4) mit einem darin angeordneten Flüssigkeitsabscheider (23) in Verbindung steht.

8. Vorrichtung nach Anspruch 7, dadurch gekennzeichnet, daß dem Flüssigkeitsabscheider (23) und den Kühlwalzen (20, 21) ein Kühlmittel von einem gemeinsamen Kühlmittelumlaufsystem zuführbar ist.

9. Vorrichtung nach Anspruch 8, dadurch gekennzeichnet, daß das Kühlmittelumlaufsystem einen an ein Kältemittelumlaufsystem angeschlossenen ersten Wärmetauscher (41) umfaßt.

10. Vorrichtung nach Anspruch 9, dadurch gekennzeichnet, daß das Kältemittelumlaufsystem einen zweiten Wärmetauscher (27) umfaßt, dem erwärmtes, aus einer Kältemaschine (25) austretendes Kältemittel zuführbar ist, während dem ersten Wärmetauscher (41) das vom zweiten Wärmetauscher (27) zur Kältemaschine zurückfließende abgekühlte Kältemittel zuführbar ist.

11. Vorrichtung nach Anspruch 9 und 10, dadurch gekennzeichnet, daß der erste Wärmetauscher (41) und die Kältemaschine (25) in einer fünften Kammer (6) und der zweite Wärmetauscher (27) zusammen mit einer Heizeinrichtung (30) und einem von einem Wärmeübertragungsmedium zur Beheizung der Heizwalzen (18, 19) durchströmten dritten Wärmetauscher (31) in einer sechsten Kammer (7) angeordnet sind.

12. Vorrichtung nach Anspruch 11, dadurch gekennzeichnet, daß das Wärmeübertragungsmedium einem in einer siebten Kammer (8) des Gehäuses angeordneten vierten Wärmetauscher (35) zum Erwärmen des in die erste Kammer (2) einzuführenden gasförmigen Mediums zuführbar ist.

13. Vorrichtung nach Anspruch 11 oder 12, dadurch gekennzeichnet, daß wenigstens die fünfte, sechste und/oder siebte Kammer (6, 7, 8) hermetisch nach außen abgeschirmt ist.

**Claims**

1. A method for heat drying of printed or inked webs by contact heating and subsequent contact cooling of the web, characterized in that the web prior to the contact heating is subjected to a short-term contactless heat treatment at a higher temperature than during the contact heating.

2. The method according to claim 1, characterized in that the short-term contactless heat treatment of the web is performed by means of a gaseous medium at a temperature of about 300 °C, the contact heating is performed by means of heating rollers (18, 19) at a temperature of about 230 °C, and the contact cooling is performed by means of cooling rollers (20, 21) at a temperature of about 25 °C.

3. The method according to claim 2, characterized in that the web is looped along the heating and cooling rollers (18, 21) in an essentially S-shaped manner.

4. A device for heat drying of printed or inked webs comprising a housing (1) divided into chambers through which the web is sequentially passed, wherein at least a pair of heating rollers (18, 19) adapted to be driven is arranged in a (second) chamber (3) for contact heating of the web, and wherein at least a pair of cooling rollers (20, 21) adapted to be driven is arranged in a subsequent (third) chamber (5) for contact cooling of the web, characterized by a first chamber (2) arranged ahead the second chamber (3) in which first chamber a gaseous medium for a short-term contactless heat treatment of the web prior to the contact heating is adapted to be introduced.

5. The device according to claim 4, characterized in that an application roller (50, 51) for a buffer agent and a cleaning roller (48, 49) is associated to each of said heating rollers (18, 19).

6. The device according to claim 5, characterized in that each application roller (50, 51) and cleaning roller (48, 49) comprises a tubular body (52) provided with radial perforations (54') on which a porous layer consisting of a plurality of closely juxtapositioned rings (56) of fibres or felt-type material is disposed.

7. The device according to one of the claims 4 to 6, characterized by a blower (22) the suction side of which is in communication with the second chamber (3) and the output side thereof is in communication with a fourth chamber (4) having arranged therein a liquid extractor (23).

8. The device according to claim 7, characterized in that a cooling medium from a common cooling medium circulating system is adapted to be introduced into the liquid extractor (23) and the cooling rollers (20, 21).

9. The device according to claim 8, characterized in that the cooling medium circulating system comprises a first heat exchanger (41) connected to a refrigerating medium circulating system.

10. The device according to claim 9, characterized in that the refrigerating medium circulating system comprises a second heat exchanger (27) adapted to receive the heated refrigerating medium from a refrigerating machine (25) while the cooled refrigerating medium returning from the second heat exchanger (27) to the refrigerating machine is adapted to be supplied to said first heat exchanger (41).

11. The device according to claims 9 and 10, characterized in that the first exchanger (41) and the refrigerating machine are disposed in a fifth chamber (6) and that the second heat exchanger (27) together with heating means (30) and a third heat exchanger (31) through which the heat transfer medium for heating the heating rollers (18, 19) flows, are disposed in a sixth chamber (7).

12. The device according to claim 11, characterized in that the heat transfer medium is adapted to be introduced into a fourth heat exchanger (35) disposed in a seventh chamber (8) of the housing for heating the gaseous medium to be introduced into the first chamber (2).

13. The device according to claim 11 or 12, characterized in that at least the fifth, sixth and/or seventh chamber (6, 7, 8) is hermetically sealed from the outside.

## Revendications

1. Procédé de thermoséchage de bandes imprimées ou peintes par chauffage par contact suivi d'un refroidissement par contact de la bande, caractérisé en ce qu'avant le chauffage par contact, la bande est soumise à un traitement thermique de courte durée sans contact de la bande, à une température supérieure à celle du chauffage par contact.

2. Procédé de thermoséchage suivant la revendication 1, caractérisé en ce que le traitement thermique de courte durée sans contact de la bande est réalisé au moyen d'un milieu gazeux à une température de 300 °C environ, le chauffage par contact au moyen de cylindres de chauffage (18, 19) à une température de 230 °C environ et le refroidissement par contact au moyen de cylindres de refroidissement (20, 21) à une température de 25 °C environ.

3. Procédé de thermoséchage suivant la revendication 2, caractérisé en ce que la bande s'enroule substantiellement en forme de S autour des cylindres de chauffage et de refroidissement (18-21).

4. Dispositif de thermoséchage de bandes imprimées ou peintes présentant un corps (1) divisé en chambres traversées successivement par la bande, au sein duquel une paire au moins de cylindres de chauffage commandés (18, 19) destinés au chauffage par contact de la bande se trouve installée dans une (deuxième) chambre (3) et une paire au moins de cylindres de refroidissement commandés (20, 21) destinés au refroidissement par contact de la bande se trouve installée dans une (troisième) chambre (5) située en aval de la deuxième chambre (3), caractérisé en ce qu'en amont de la deuxième chambre (3), il est prévu une première chambre (2) dans laquelle un milieu gazeux destiné au traitement thermique de courte durée sans contact de la bande peut être injecté avant le chauffage par contact.

5. Dispositif de thermoséchage suivant la revendication 4, caractérisé en ce que chacun des cylindres de chauffage (18, 19) est équipé d'un rouleau d'enduction (50, 51) d'un agent séparateur et d'un rouleau de nettoyage (48, 49).

6. Dispositif de thermoséchage suivant la revendication 5, caractérisé en ce que chacun des rouleaux d'enduction (50, 51) et des rouleaux de nettoyage (48, 49) comporte un corps tubulaire (52) pourvu d'orifices radiaux de passage, sur lequel se trouve installé un revêtement poreux constitué d'une série d'anneaux (56) en matière fibreuse ou feutrée disposés de manière serrée les uns contre les autres.

7. Dispositif de thermoséchage suivant une des revendications 4 à 6, caractérisé en ce qu'il y est prévu une soufflerie (22) dont le côté aspiration se trouve en communication avec la deuxième chambre (3) et le côté soufflant en communication avec une quatrième chambre (4) comportant un séparateur de liquide (23).

8. Dispositif de thermoséchage suivant la revendication 7, caractérisé en ce qu'un réfrigérant provenant d'un système de circulation de réfrigérant commun alimente le séparateur de liquide (23) et les cylindres de refroidissement (20, 21).

9. Dispositif de thermoséchage suivant la revendication 8, caractérisé en ce que le système de circulation du réfrigérant comporte un premier échangeur de chaleur (41) relié à un système de circulation de frigorigène.

10. Dispositif de thermoséchage suivant la revendication 9, caractérisé en ce que le système de circulation du frigorigène comporte un deuxième échangeur de chaleur (27), lequel reçoit le frigorigène réchauffé sortant d'une machine frigorifique (25), tandis que le premier échangeur de chaleur (41) reçoit le frigorigène refroidi revenant du deuxième échangeur de chaleur (27) vers la machine frigorifique.

11. Dispositif de thermoséchage suivant les revendications 9 et 10, caractérisé en ce que le premier échangeur de chaleur (41) et la machine frigorifique (25) sont installés dans une cinquième chambre (6) et en ce que le deuxième échangeur de chaleur (27) ainsi qu'un dispositif de chauffage (30) et un troisième échangeur de chaleur (31) traversé par un agent caloporteur destiné au chauffage des cylindres de chauffage (18, 19) sont installés dans une sixième chambre (7).

12. Dispositif de thermoséchage suivant la revendication 11, caractérisé en ce que l'agent caloporteur est envoyé vers un quatrième échangeur de chaleur (35) installé dans une septième chambre (8) du corps (1) et destiné à chauffer le milieu gazeux injecté dans la première chambre (2).

13. Dispositif de thermoséchage suivant la revendication 11 ou 12, caractérisé en ce que les cinquième, sixième et/ou septième chambres (6, 7, 8) au moins sont fermées hermétiquement par rapport à l'extérieur du corps (1).

# FIG. 1

0 130 625

# FIG. 2

# FIG. 3

# FIG. 4

51

52

53

54

54'

55

56

0 130 625

4